Europäisches Patentamt

European Patent Office

Office européen des brevets

(11) Veröffentlichungsnummer: **0 172 922**
**B1**

(12) **EUROPÄISCHE PATENTSCHRIFT**

(45) Veröffentlichungstag der Patentschrift:
**12.04.89**

(51) Int. Cl.⁴: **B 62 D 55/12, F 16 H 55/30**

(21) Anmeldenummer: **84109908.8**

(22) Anmeldetag: **20.08.84**

(54) Zahnrad, insbesondere für Kettenfahrzeuge.

(43) Veröffentlichungstag der Anmeldung:
**05.03.86 Patentblatt 86/10**

(45) Bekanntmachung des Hinweises auf die Patenterteilung:
**12.04.89 Patentblatt 89/15**

(84) Benannte Vertragsstaaten:
**DE FR GB IT**

(56) Entgegenhaltungen:
DE-A- 3 319 148
DE-B- 2 914 127

**PATENT ABSTRACTS OF JAPAN, Band 5, Nr. 10, 22. Januar 1981, Seite (M-51) (682); & JP-A-55-142159 (KOMATSU SEISAKUSHO) 06-11-1980**

(73) Patentinhaber: **KABUSHIKI KAISHA KOMATSU SEISAKUSHO, 3-6, Akasaka 2-chome, Minato-ku Tokyo 107 (JP)**

(72) Erfinder: **Umeda, Haruhiko, 17 Nakamaru Kanagawa-ku, Yokohama-shi Kanagawa-ken (JP)**
Erfinder: **Fujita, Nobuo, 318-21 Ichinotsubo Makishima-cho, Uji-shi Kyoto-fu (JP)**
Erfinder: **Bando, Keiji, 4-11-15 Ohsumigaoka Tanabe-cho, Tsuzuki-gun Kyoto-fu (JP)**
Erfinder: **Onohara, Kazuyuki, 5-37 Takigikitamachida Tanabe-cho, Tsuzuki-gun Kyoto-fu (JP)**
Erfinder: **Fujiwara, Yasuo, 8 Otokoyama Yutoku, Yawata-shi Kyoto-fu (JP)**

(74) Vertreter: **Patentanwälte TER MEER - MÜLLER - STEINMEISTER, Mauerkircherstrasse 45, D-8000 München 80 (DE)**

ACTORUM AG

## Beschreibung

Die Erfindung betrifft ein Zahnrad gemäss dem Oberbegriff des Patentanspruchs 1 (siehe JP-A 5 514 299).

Es ist bereits vorgeschlagen worden, ein Zahnrad mit einem inneren Radkranz zu versehen, der fest auf einer drehbaren Nabe angeordnet ist. Dabei ist der innere Radkranz von einem konzentrisch zu ihm angeordneten äusseren Radkranz umgeben, der auf seinem äusseren Umfang eine Reihe von Zähnen trägt, die beispielsweise mit der Kette eines Kettenfahrzeuges zusammenwirken. Zur Herstellung einer mehr oder weniger elastischen Verbindung zwischen dem inneren und dem äusseren Radkranz des Zahnrades wurden verschiedene Möglichkeiten diskutiert bzw. erprobt. Danach können zum Beispiel zwischen dem inneren und dem äusseren Radkranz Drehmoment-Stifte über elastische Elemente derart angeordnet sein, dass die elastischen Elemente Belastungen in radialer Richtung des Zahnrades aufnehmen können. Allerdings tritt zwischen dem inneren und dem äusseren Radkranz ein Metallkontakt über die Drehmoment-Stifte dann auf, wenn Kräfte in axialer und Umfangs- bzw. Rotationsrichtung des Zahnrades wirken. Die Drehmoment-Stifte sowie andere mit ihnen in Berührung stehende Teile nutzen daher relativ schnell ab.

Nach einem weiteren Vorschlag werden Gummikissen zwischen radialen Zähnen des inneren und äusseren Radkranzes zur elastischen Aufnahme von Kräften sowohl in radialer als auch in Umfangsrichtung des Zahnrades angeordnet (JP-A 55 142 159). Auch hier tritt ein Kontakt zwischen unterschiedlichen Metallteilen auf, wenn zwischen dem inneren und äusseren Radkranz Druckkräfte in axialer Richtung wirken. Nachteilig ist darüber hinaus, dass die Gummikissen so ausgebildet sind, dass sie vor einer Montage des Zahnrades nicht vorbelastet bzw. vorgepresst werden können. Sie werden vielmehr erst dann vorbelastet, wenn sie zwischen dem inneren und äusseren Radkranz liegen, was die Montage eines derartigen Zahnrades wesentlich erschwert. Die Gummikissen müssen darüber hinaus in unterschiedlicher Stärke vorbelastet werden, je nach Genauigkeit der Abmessungen der genannten Teile.

Ausgehend von diesem Stand der Technik liegt der Erfindung die Aufgabe zugrunde, ein Zahnrad der genannten Art so weiterzubilden, dass in möglichst einfacher Weise eine Dämpfung von Kräften sowohl in axialer als auch in radialer und Umfangsrichtung des Zahnrades erreicht wird und dass ein Verschleiss von die Kopplung zwischen den Radkränzen bewirkenden Teilen weitestgehend vermieden wird.

Die Lösung dieser Aufgabe ist im Patentanspruch 1 kurz angegeben.

Weitere vorteilhafte Ausbildungen der Erfindung sind den Unteransprüchen zu entnehmen.

Mit dem Zahnrad nach der Erfindung können beispielsweise Ketten irgendwelcher Art oder Endlosketten, insbesondere von Kettenfahrzeugen, entweder angetrieben oder nur geführt werden. Im letzteren Fall arbeitet das Zahnrad als lose mitgenommenes Element. Mit Hilfe des Zahnrades nach der Erfindung wird erreicht, dass Kräfte, die sowohl in axialer, radialer oder Umfangs- bzw. Drehrichtung des Zahnrades wirken, wirksam aufgefangen werden und daher praktisch nicht mehr oder nur noch in einem sehr geringen Masse von der Kette zum Beispiel auf ein Fahrzeug übertragen werden. Dies wird dadurch bewirkt, dass ein direkter Kontakt zwischen verschiedenen Metallteilen des inneren und äusseren Radkranzes in den verschiedenen Richtungen durch geeignete angeordnete Dämpfungsmittel verhindert wird.

Der Kern der Erfindung besteht kurz gesagt darin, dass das Zahnrad nach der Erfindung eine Nabe umfasst sowie einen inneren Radkranz, der konzentrisch zur Nabe angeordnet und zur gemeinsamen Rotation mit ihr verbunden ist, eine Reihe von bolzenartigen Mitnehmern, die in Umfangsrichtung am inneren Radkranz beabstandet voneinander sowie radial nach aussen weisend angeordnet und mit diesem fest verbunden sind, eine Vielzahl von röhrenförmig ausgebildeten Stossdämpfern, von denen jeweils einer konzentrisch auf einen bolzenartigen Mitnehmer aufgesetzt ist, einen äusseren Radkranz, der den inneren Radkranz konzentrisch umgibt und in seinem Inneren eine Reihe von sich radial erstreckenden Hohlräumen zur Aufnahme der auf den bolzenartigen Mitnehmern angeordneten Stossdämpfer besitzt, die zur elastischen Aufnahme von Kräften zwischen dem inneren und äusseren Radkranz dienen, welche in radialer, axialer und in Umfangsrichtung des Zahnrades wirken, und eine Reihe von in Umfangsrichtung auf dem äusseren Radkranz angeordneter Zähne.

Wesentlich hierbei ist, dass der innere und äussere Radkranz nur über die Stossdämpfer miteinander in Verbindung stehen. Jeder Stossdämpfer umfasst dabei zwei oder mehr konzentrische Hülsen aus relativ unelastischem Material, zum Beispiel Metall, zwischen denen entsprechend ein röhrenförmiges Element bzw. mehrere röhrenförmige Elemente aus elastischem Material angeordnet sind. Diese Stossdämpfer können als Universalstossdämpfer bezeichnet werden, da sie Kräfte zwischen dem inneren und äusseren Radkranz aufnehmen, die sowohl in radialer als auch in axialer und in Rotationsrichtung bzw. Umfangsrichtung des Zahnrades wirken. Da sich keine Metallteile des inneren und des äusseren Ringes berühren, kann ferner auf eine Schmierung verzichtet werden. Die Stossdämpfer können darüber hinaus individuell vorbelastet werden, bevor sie an den vorgesehenen Stellen zwischen dem inneren und äusseren Radkranz angeordnet werden. Die Montage des Zahnrades nach der Erfindung ist daher erheblich einfacher als die der eingangs beschriebenen Zahnräder. Die Stärke der Vorbelastung für die jeweiligen Stossdämpfer ist darüberhinaus von der jeweiligen Genauigkeit der Abmessungen des inneren und äusseren Radkranzes praktisch unabhängig.

Die Montage des erfindunsgemässen Zahnrades wird ferner dadurch weiter vereinfacht, dass der äussere Radkranz in Richtung einer senkrecht zur Drehachse des Zahnrades liegenden Ebene in zwei äussere Teilradkränze unterteilt ist, die miteinander fest verbindbar sind. Die beiden äusseren Teilradkränze können zum Beispiel miteinander verschraubt oder in anderer geeigneter Weise verbunden werden, nachdem die Stossdämpfer auf die bolzenartigen Mitnehmer des inneren Radkranzes aufgesetzt worden sind.

Nach einer vorteilhaften Ausbildung der Erfindung besitzt das Zahnrad ein Paar ringförmig ausgebildeter Endabdeckungen, die an in axialer Richtung gegenüberliegenden Seiten des inneren Radkranzes befestigt sowie an gegenüberliegenden Seiten des äusseren Radkranzes beabstandet von diesem angeordnet sind, wobei ein Paar ringförmiger Dichtungen aus elastischem Material zur Abdichtung der Lücke zwischen dem äusseren Radkranz und den Endabdeckungen sowie zur elastischen Aufnahme von zwischen dem äusseren Radkranz und den Endabdeckungen auftretenden Kräften, die in radialer, axialer und in Umfangsrichtung des Zahnrades wirken, vorgesehen ist.

Die Endabdeckungen können dabei so am inneren Radkranz befestigt sein, dass durch sie die ringförmigen Dichtungen ebenfalls zusammengepresst werden.

Nach einer besonders vorteilhaften Ausbildung der Erfindung sind ferner die bolzenartigen Mitnehmer, die Hülsen, die röhrenförmigen Elemente sowie die Hohlräume im äusseren Radkranz zylindrisch ausgebildet, was eine relativ einfache Herstellung der Komponenten des Zahnrades erlaubt.

Das Zahnrad nach der Erfindung besitzt gegenüber den eingangs erwähnten Zahnrädern nicht nur eine erhöhte Lebensdauer, sondern trägt auch dazu bei, den Fahrkomfort bei Kettenfahrzeugen zu vergrössern.

Die Zeichnung stellt ein Ausführungsbeispiel der Erfindung dar. Es zeigen:

Fig. 1 einen Axialschnitt durch das Zahnrad nach der Erfindung, das in diesem Fall als Antriebszahnrad für die Kette eines Kettenfahrzeugs ausgebildet ist,

Fig. 2 einen Teilquerschnitt durch das Zahnrad entlang der Linie II–II in Figur 1,

Fig. 3 eine perspektivische Ansicht des inneren Radkranzes sowie der äusseren Teilradkränze,

Fig. 4 einen Schnitt entlang der Linie IV–IV nach Figur 2 durch die bolzenförmigen Aufnehmer bzw. Stossdämpfer in vergrösserter Darstellung und

Fig. 5 einen Schnitt entlang der Linie V–V nach Figur 2 als Draufsicht auf die bolzenförmigen Mitnehmer bzw. Stossdämpfer in vergrösserter Darstellung.

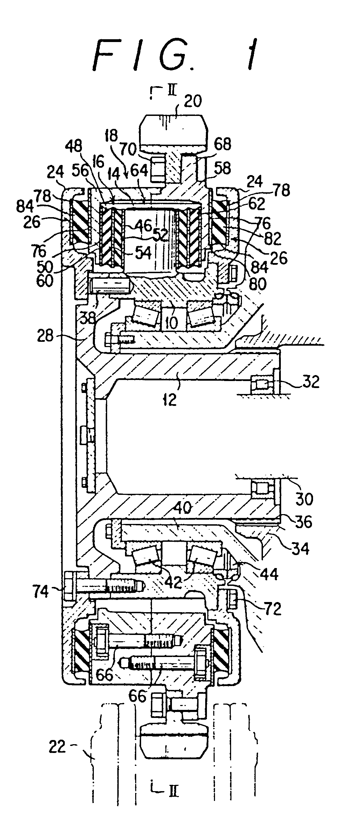

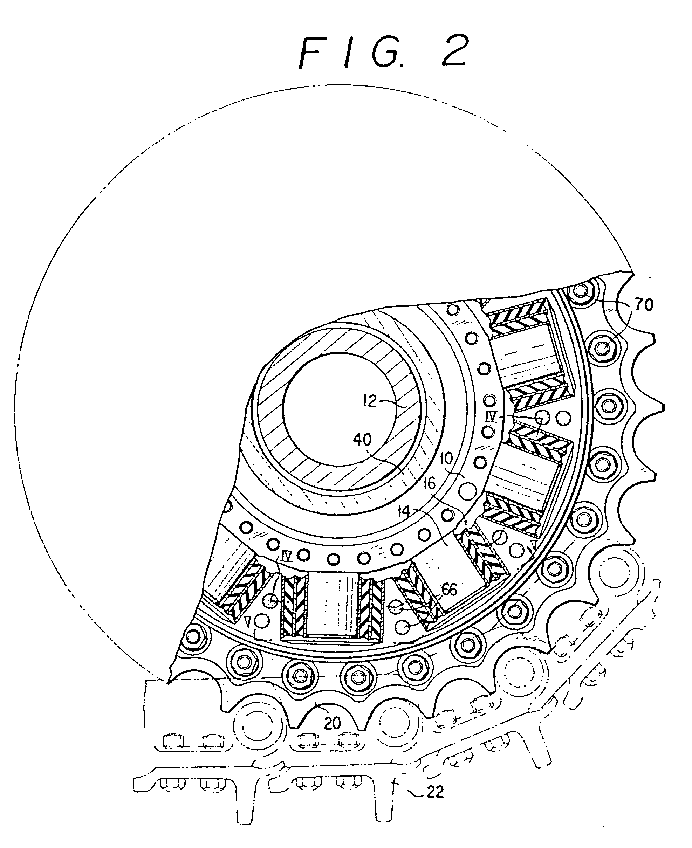

Anhand der Figuren 1 bis 3 soll zunächst der grundsätzliche Aufbau des Zahnrades nach der Erfindung erläutert werden. Das Zahnrad ist im vorliegenden Fall als Antriebszahnrad ausgebildet, um beispielsweise eine Kette in Bewegung zu setzen. Diese Kette kann eine beliebige Transportkette oder diejenige eines Kettenfahrzeugs sein. Selbstverständlich kann das Zahnrad auch als lose mitgenommenes Zahnrad zur Führung einer Kette dienen, wobei dann keine Verbindung zu einem Antriebssystem vorgesehen zu sein braucht.

Das Zahnrad nach der Erfindung besitzt einen inneren Radkranz 10, der eine Nabe 12 konzentrisch umgibt und mit dieser fest verbunden ist, um eine gemeinsame Rotation mit ihr auszuführen. Die Nabe 12 kann beispielsweise eine Antriebswelle sein. Auf dem äusseren Umfang des inneren Radkranzes 10 sind eine Vielzahl von bolzenartigen Mitnehmern 14 in einer Reihe in Umfangsrichtung sowie unter äquidistanten Abständen angeordnet, wobei sich die bolzenartigen Mitnehmer 14 in radialer Richtung erstrecken. Diese bolzenartigen Mitnehmer 14 sind vorzugsweise zylindrisch ausgebildet, können aber auch eine andere geeignete Form besitzen. Auf jedem dieser bolzenartigen Mitnehmer 14 befindet sich ein Universalstossdämpfer 16, der weiter unten genauer beschrieben wird. Der innere Radkranz 10 ist von zwei äusseren Teilradkränzen 56, 58 eines äusseren Radkranzes 18 konzentrisch umgeben, wobei die mechanische Kopplung zwischen dem inneren und dem äusseren Radkranz 10, 18 über die bolzenförmigen Mitnehmer 14 und die Stossdämpfer 16 erfolgt. Der äussere Radkranz 18 trägt an seinem äusseren Umfang eine in Umfangsrichtung verlaufende Reihe von Zähnen 20, die mit einer Kette in Verbindung stehen. An gegenüberliegenden axialen Enden des inneren Radkranzes 10 sind jeweils ringförmige Endabdeckungen 24 befestigt, die die Seiten des äusseren Radkranzes 18 wenigstens teilweise derart umgreifen, dass zwischen diesen und den Endabdeckungen 24 eine Lücke besteht. Innerhalb dieser auf beiden Seiten des Zahnrades vorhandenen Lücke zwischen den Endabdeckungen 24 und dem äusseren Radkranz 18 ist jeweils zur Abdichtung ein ringförmiges Dichtungselement 26 angeordnet.

Wie in der Figur 1 dargestellt, besitzt die den inneren Ring 10 tragende Nabe 12 die Form eines Hohlzylinders, der an seiner einen Seite einen Flansch 28 aufweist, über den der innere Ring 10 mit der Nabe 12 fest verbunden ist. Die Nabe 12 ist drehbar auf einer Achse 30 mit Hilfe von Lagern 32 angeordnet. Zum Antreiben bzw. Drehen der Nabe 12 ist ein Antriebselement 34 vorgesehen, das mit dieser zum Beispiel über eine Keil-Nut-Verbindung 36 gekoppelt sein kann. Selbstverständlich sind auch andere Verbindungen zwischen dem Antriebselement 34 und der Nabe 12 zu diesem Zweck denkbar. Der innere Radkranz 10 ist mit Hilfe von Stiften 38 oder anderen geeigneten Elementen mit dem Flansch 28 fest verbunden, so dass sich der innere Radkranz 10 mit der Nabe 12 mitdrehen kann. Er ist ferner mit Hilfe von Lagern 42 drehbar auf einem Träger 40 montiert, welcher zum Beispiel mit einem nicht dargestellten Fahrzeugrahmen bzw. Chassis fest verbunden ist. Zwischen diesem Träger 40 und dem inneren Radkranz 10 befindet sich eine Dichtung 44, beispielsweise eine Gleitdichtung, um den Austritt eines Schmiermittels für die Lager 42 zu verhindern.

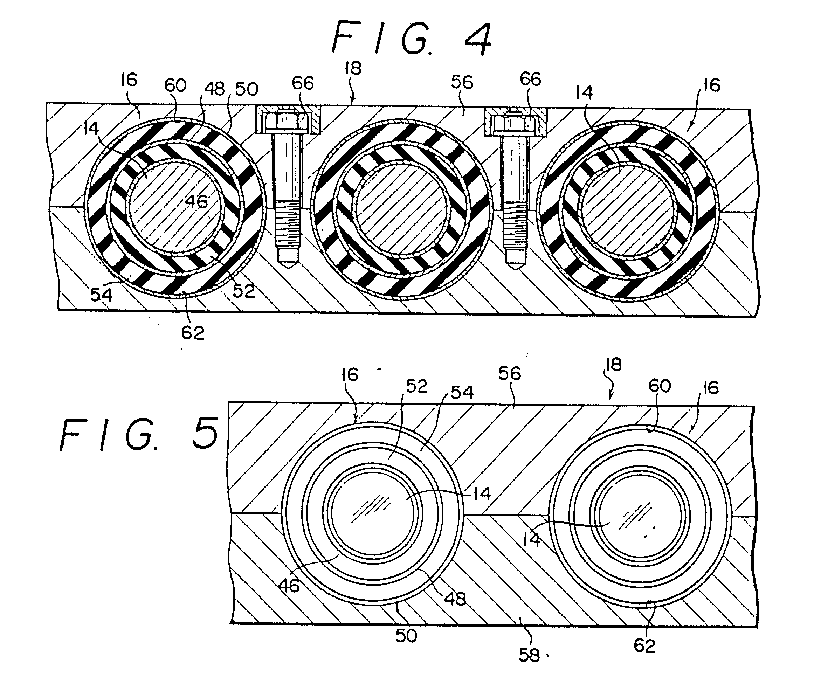

In den Figuren 4 und 5 ist genauer dargestellt, wie die Universalstossdämpfer 16 auf den bolzenförmigen Mitnehmern 14 des inneren Radkranzes 10 angeordnet sind und wie diese mit dem äusseren Radkranz 18 in Eingriff stehen. Die bolzenförmigen Mitnehmer 14 sind dabei beispielsweise als zylindrische Säulen ausgebildet. Jeder Stossdämpfer 16 besteht aus drei konzentrischen Hülsen 46, 48 und 50, die aus Metall oder einem anderen ähnlich festen sowie relativ unelastischen Material hergestellt sind. Zwischen den drei konzentrischen Hülsen 46, 48 und 50 befinden sich röhrenförmige Elemente 52 und 54 aus elastischem Material wie zum Beispiel Gummi oder einem Kunststoff. Das elastische Element 52 ist zwischen der inneren Hülse 46 und der mittleren Hülse 48 fest angeordnet, während das andere elastische Element 54 zwischen der mittleren Hülse 48 und der äusseren Hülse 50 fest positioniert ist. Der Innendurchmesser der inneren Hülse 46 ist so gewählt, dass diese auf einen bolzenförmigen Mitnehmer 14 passend aufgesetzt bzw. aufgepasst werden kann. Beide elastischen Elemente 52 und 54 eines jeden Stossdämpfers 16 können bis zu einem bestimmten Grad in gewünschter Weise vorgepresst bzw. vorgespannt sein, was vor ihrer Montage auf die bolzenförmigen Mitnehmer 14 erfolgen kann. Die Stossdämpfer 16 können selbstverständlich auch in anderer geeigneter Weise ausgebildet sein. In der einfachsten Form kann jeder Stossdämpfer 16 nur zwei konzentrische Hülsen aus relativ unelastischem Material mit einem fest dazwischen angeordneten röhrenförmigen Element aus elastischem Material besitzen. Das elastische Material kann zum Beispiel dadurch vorgepresst werden, dass der Durchmesser der äusseren Hülse nach Einbringung des elastischen Materials zwischen die Hülsen in geeigneter Weise verkleinert wird.

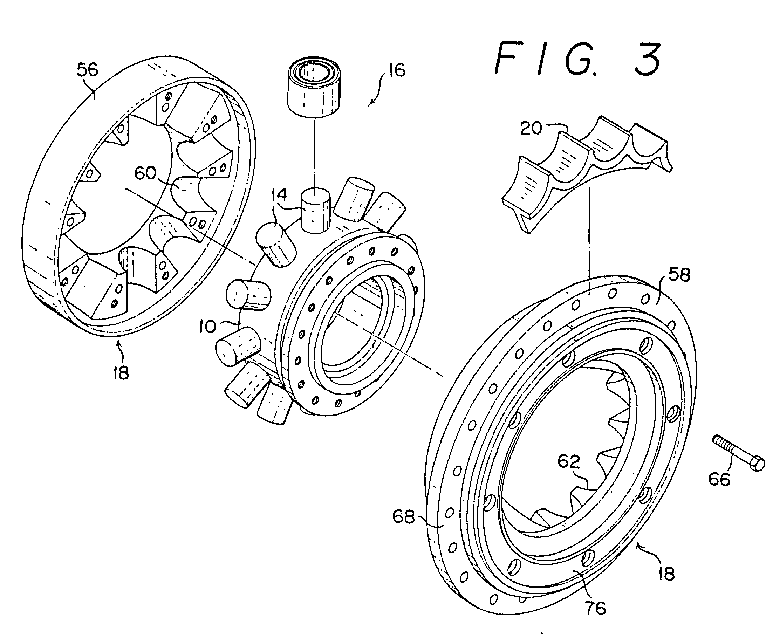

Wie in den Figuren 1 und 3 dargestellt, ist der äussere Radkranz 18 zur Vereinfachung der Montage in zwei äussere Teilradkränze 56 und 58 entlang einer Ebene aufgeteilt, die senkrecht zur Drehachse des Zahnrades sowie genau durch die Achsen der bolzenförmigem Mitnehmer 14 auf dem inneren Radkranz 10 verläuft. In der Figur 3 ist zu erkennen, dass die beiden äusseren Teilradkränze 56 und 58 jeweils eine Reihe von halbzylinderförmig ausgebildeten Ausnehmungen 60 und 62 besitzen, die in radialer Richtung verlaufen. Werden die äusseren Teilradkränze 56, 58 miteinander verbunden, so bilden jeweils zwei halbzylinderförmig ausgebildete Ausnehmungen 60, 62 eine zylindrische Öffnung 64, wie in Figur 1 dargestellt ist, die ebenfalls radial verläuft und deren Eingang sich am inneren Umfang des äusseren Radkranzes 18 befindet. Diese Öffnungen 64 sind so ausgebildet bzw. angeordnet, dass sie die auf den bolzenförmigen Mitnehmern 14 des inneren Radkranzes 10 montierten Stossdämpfer 16 dicht umfassen. Nachdem die Stossdämpfer in die Öffnungen 64 eingebracht worden sind, werden die beiden äusseren Teilradkränze 56 und 58 miteinander fest verbunden, beispielsweise durch Schrauben 66, die jeweils zwischen zwei benachbarten Stossdämpfern 16 liegen, wie den Figuren 1, 2 und 4 zu entnehmen ist. Aus ihnen ist zu erkennen, dass der innere Radkranz 10 und der äussere Radkranz 18 nur über die Stossdämpfer 16 miteinander gekoppelt sind, wobei kein Kontakt zwischen Metallteilen der verschiedenen Radkränze auftritt.

Der in der Figur 3 rechts dargestellte äussere Teilradkranz 58 des äusseren Radkranzes 18 besitzt an seinem Umfang einen Flansch 68, mit dem eine Zahnreihe mit Hilfe von Bolzen 70 fest verbunden ist, wie in Figur 1 dargestellt. Die Zahnreihe 20 wirkt mit einer Kette 22 zusammen, die beispielsweise zu einem Kettenfahrzeug gehört.

Wie in Figur 1 weiter dargestellt ist, befindet sich auf jeder Seite des Zahnrades eine ringförmige Endabdeckung 24. Diese Endabdeckungen 24 sind an ihrem inneren Umfang mit dem inneren Radkranz 10 durch Schrauben 72 bzw. 74 fest verbunden. Die auf der rechten Seite in Figur 1 dargestellte Endabdeckung 24 ist mit Hilfe der Schrauben 72 direkt am inneren Ring 10 befestigt, während die auf der linken Seite dargestellte Endabdeckung 24 mit Hilfe der Schrauben 74 über den Flansch 28 der Nabe 12 mit dem inneren Radkranz 10 verbunden ist. Neben den bereits erwähnten Stiften 38 dienen somit die Schrauben 74 auch zur weiteren Befestigung des inneren Radkranzes 10 am Nabenflansch 28.

Zur Abdichtung der Lücke zwischen den jeweiligen Endabdeckungen 24 und dem äusseren Radkranz 18, dessen Seiten von den Endabdeckungen 24 wenigstens teilweise umfasst werden, ist an jeder Seite des Zahnrades ein Dichtring 26 vorgesehen. Um den Dichtring 26 zu positionieren, besitzt der äussere Radkranz 18 an seinen beiden Seiten Nuten 76 zur Aufnahme des Dichtringes, während die Endabdeckungen 24 ebenfalls derartige Nuten 78 an ihren dem äusseren Radkranz 18 gegenüberliegenden Seiten aufweisen. Jeder Dichtring 26 besitzt ein Paar von kreisscheibenförmig ausgebildeten Halteplatten 80, 82, zwischen denen ein ringförmiges Element 84 aus Gummi oder einem anderen geeigneten elastischen Material fest angeordnet ist. Die Halteplatten 80 werden in den Nuten 76 des äusseren Radkranzes 18 und die Halteplatten 82 in den Nuten 78 der Endabdeckungen 24 gehalten. Statt in Nuten können die Halteplatten 80, 82 auch in anderen geeigneten Ausnehmungen positioniert sein. Die Gesamtdicke jedes Dichtungsringes 26 vor seiner Montage am Zahnrad ist grösser als der jeweilige Abstand zwischen gegenüberliegenden Ausnehmungen 76 und 78 zur Aufnahme des Dichtungsringes, wenn die Endabdeckungen 24 am inneren Radkranz 10 montiert sind. Das bedeutet, dass die Endabdeckungen 24 die Dichtringe 26 nach ihrer Montage am Zahnrad bzw. die ringförmigen elastischen Elemente 84 der Dichtringe 26 zusammendrücken, wenn die Endabdeckungen 24 am inneren Radkranz mittels der Schrauben 72, 74 festgeschraubt werden.

Selbstverständlich müssen die Dichtringe 26 so ausgelegt sein, dass sie die gewünschte elastische Verbindung zwischen dem inneren Radkranz 10 und dem äusseren Radkranz 18 nicht beeinträchtigen. Andererseits sollen die Dichtringe 26 mit ihren elastischen Elementen 84 mit den Stossdämpfern 16 zusammenwirken, um impulsartig in verschiedenen Richtungen zwischen dem inneren Radkranz 10 und dem äusseren Radkranz 18 auftretende Kräfte zu dämpfen. Axiale Kräfte zwischen den Radkränzen 10, 18 bewirken eine Kompression des elastischen Elementes 84, während radiale und in Umfangsrichtung bzw. Drehrichtung wirkende Kräfte eine Scherung des elastischen Elementes hervorrufen.

Wird bei einem Betrieb des Zahnrades mit Hilfe eines Antriebselements 34 die Nabe 12 über die Keil-Nut-Verbindung 36 in Rotation versetzt, so dreht sich der innere Radkranz 10 mit der Nabe 12 mit, da er über den Flansch 28 mit der Nabe 12 mit Hilfe der Stifte 38 und der Schrauben 74 fest verbunden ist. Die Rotation des inneren Radkranzes 10 bzw. der inneren Trommel wird auf den äusseren Radkranz 18 bzw. die äussere Trommel mittels der bolzenförmigen Mitnehmer 14 und der Universalstossdämpfer 16 übertragen. Mit dem äusseren Radkranz 18 rotieren gleichzeitig die Zähne 20, so dass eine Ketteneinrichtung 22 antreibbar ist, um ein Fahrzeug zu bewegen. Alle Kräfte, die bei Bewegung des Fahrzeuges zwischen dem inneren Radkranz 10 und dem äusseren Radkranz 18 in axialer, radialer und/oder Rotationsrichtung des Zahnrades auftreten, werden durch die Stossdämpfer 16 und die Dichtringe 26 gedämpft, so dass dadurch der Fahrkomfort verbessert wird.

Darüberhinaus lässt sich das Zahnrad nach der Erfindung in einfacher Weise montieren. Nachdem der innere Radkranz 10 am Nabenflansch 28 befestigt ist und bevor die Endabdeckungen 24 am inneren Radkranz 10 angeschraubt sind, werden die vorgepressten bzw. vorgespannten Stossdämpfer 16 auf die bolzenförmigen Mitnehmer 14 des inneren Radkranzes 10 aufgesetzt. Dann wird der äussere Radkranz 18 so positioniert, dass die Stossdämpfer 16 in seinen Öffnungen 64 zu liegen kommen. Sodann werden beide äusseren Teilradkränze 56 und 58 miteinander verschraubt. Anschliessend werden die Endabdeckungen 24 am inneren Radkranz 10 angeschraubt, wobei die Dichtringe 26 zwischen den Endabdeckungen 24 und dem äusseren Radkranz 18 liegen.

Wie bereits erwähnt, kann das Zahnrad nach der Erfindung als Antriebszahnrad verwendet werden. Es kann aber auch, ohne Antriebsmechanismus versehen, als frei mitlaufendes Zahnrad eingesetzt werden, beispielsweise als Führungs- oder Spannzahnrad, als Ausgleichs- oder Vorlagezahnrad, und so weiter.

Die bolzenförmigen Mitnehmer 14 können darüber hinaus auch eine andere als eine zylindrische Form besitzen. Beispielsweise können sie auch konisch bzw. kegelförmig sein.

**Patentansprüche**

1. Zahnrad, insbesondere für Kettenfahrzeuge, mit einer Nabe (12), einem konzentrisch zur Nabe angeordneten und zur gemeinsamen Drehung mit dieser verbundenen inneren Radkranz (10), einer Reihe von radial nach aussen weisenden, in Umfangsrichtung in Abständen auf dem inneren Radkranz (10) fest angeordneten Mitnehmern (14), einem äusseren Radkranz (18), der den inneren Radkranz (10) konzentrisch umgibt und in seinem Inneren eine Reihe von Hohlräumen (60, 62) zur Aufnahme der Mitnehmer (14) aufweist, einer Anzahl von Stossdämpfern (16), die zwischen den Mitnehmern (14) und den Wänden der Hohlräume (60, 62) angeordnet sind, und einer Anzahl von in Umfangsrichtung auf dem äusseren Radkranz (18) verteilt angeordneter Zähne (20), dadurch gekennzeichnet, dass die Mitnehmer (14) des inneren Radkranzes (10) bolzenartig ausgebildet sind, dass die Stossdämpfer (16) röhrenförmig ausgebildet und jeweils konzentrisch auf einen der bolzenartigen Mitnehmer (18) aufgesetzt sind und dass die Ausnehmung (60, 62) eine zylindrische Öffnung (64) bilden.

2. Zahnrad nach Anspruch 1, gekennzeichnet durch
- ein Paar ringförmig ausgebildeter Endabdeckungen (24), die an in axialer Richtung gegenüberliegenden Seiten des inneren Radkranzes (10) befestigt sowie an gegenüberliegenden Seiten des äusseren Radkranzes (18) beabstandet von diesem angeordnet sind, und durch
- ein Paar ringförmiger Dichtungen (26) aus elastischem Material zur Abdichtung der Lücke zwischen dem äusseren Radkranz (18) und den Endabdeckungen (24) sowie zur elastischen Aufnahme von zwischen dem äusseren Radkranz (18) und den Endabdeckungen (24) auftretenden Kräften, die in radialer, axialer und Umfangsrichtung des Zahnrades wirken.

3. Zahnrad nach Anspruch 2, dadurch gekennzeichnet, dass die Endabdeckungen (24) so am inneren Radkranz (10) befestigt sind, dass durch sie die ringförmigen Dichtungen (26) zusammengepresst werden.

4. Zahnrad nach einem der Ansprüche 1 bis 3, dadurch gekennzeichnet, dass ein Stossdämpfer (16) jeweils eine innere Hülse (46) aus relativ unelastischem Material, die direkt auf einen bolzenartigen Mitnehmer (14) aufgepasst ist, eine äussere Hülse (48) aus relativ unelastischem Material, die die innere Hülse (46) konzentrisch umgibt, und ein röhrenförmiges Element (52) aus elastischem Material umfasst, welches zwischen der inneren und äusseren Hülse (46, 48) angeordnet ist.

5. Zahnrad nach Anspruch 4, dadurch gekennzeichnet, dass ein Stossdämpfer (16) zusätzlich eine weitere, die äussere Hülse (48) konzentrisch umgebende Hülse (50) aus relativ unelastischem Material sowie ein zwischen der äusseren und der weiteren Hülse (48, 50) angeordnetes weiteres röhrenförmiges Element (54) aus elastischem Material umfasst.

6. Zahnrad nach einem der Ansprüche 1 bis 5, dadurch gekennzeichnet, dass der äussere Radkranz (18) in Richtung einer senkrecht zur Drehachse des Zahnrades liegenden Ebene in zwei äussere Teilradkränze (56, 58) unterteilt ist, die miteinander fest verbindbar sind.

7. Zahnrad nach einem oder mehreren der Ansprüche 1 bis 6, dadurch gekennzeichnet, dass die bolzenartigen Mitnehmer (14), die Hülsen (46, 48, 50), die röhrenförmigen Elemente (52, 54) sowie die Hohlräume (60, 62) zylindrisch ausgebildet sind.

## Claims

1. Sprocket, particularly for track type vehicles, comprising a hub, an inner rim (10) concentrically mounted to the hub for joint rotation therewith, a series of studs (14) rigidly formed on the inner rim at circumferential spacings and projecting radially outwardly therefrom, an outer rim (18) concentrically surrounding the inner rim (10) and having a plurality of cavities (60, 62) on the inner side thereof adapted to receive the studs (14), a plurality of shock absorbers (16) being arranged between the studs (14) and the walls of the cavities (60, 62), and a plurality of teeth (20) formed at circumferential spacings on the outer rim (18) characterized in that the studs (14) of the inner rim (10) are bolt-shaped, that the shock absorbers (16) are tube-shaped and concentrically positioned on the bolt-shaped studs (14), and that the cavities (60, 62) form a cylindrical opening (64).

2. Sprocket as claimed in claim 1, characterized by
- a pair of annular end covers (24) secured to opposite axial sides of the inner rim (10) and disposed on the opposite sides of the outer rim (18) with gaps therebetween, and by
- a pair of annular seals (26) of elastic material for sealing the gaps between the outer rim (18) and the end covers (24) and for elastically bearing the forces exerted in the radial, axial and circumferential direction of the sprocket.

3. Sprocket as claimed in claim 2, characterized in that the covers (24) are fastened to the inner rim (10) so as to apply precompression to the annular seals (26).

4. Sprocket as claimed in one of claims 1 to 3, characterized in that each shock absorber (16) comprises an inner sleeve (46) of comparatively unelastic material fitted directly over one of the studs (14), an outer sleeve (48) of comparatively unelastic material concentrically surrounding the inner sleeve (46) and a tube-shaped element (52) of elastic material being positioned between the inner and the outer sleeves (46, 48).

5. Sprocket as claimed in claim 4, characterized in that each shock absorber (16) additionally comprises another sleeve (50) of comparatively unelastic material concentrically surrounding the outer sleeve (48) and a further tube-shaped element (54) of elastic material positioned between the outer and the further sleeves (48, 50).

6. Sprocket as claimed in one of claims 1 to 5, characterized in that the outer rim (18) is split into two outer rim-members (56, 58) being rigidly fastened together.

7. Sprocket as claimed in one or a plurality of claims 1 to 5, characterized in that the bolt-shaped studs (14), the sleeves (46, 48, 50), the tube-shaped elements (52, 54) and the cavities (60, 62) are cylindrical.

## Revendications

1. Roue dentée, en particulier pour véhicules à chenilles, comportant un moyeu (12), une couronne intérieure (10), disposée concentriquement par rapport au moyeu et solidarisée en rotation avec celui-ci, une série d'entraîneurs (14) disposés rigidement sur la couronne intérieure (10) à distance les uns des autres en direction périphérique et dirigés radialement vers l'extérieur, une couronne extérieure (18) qui entoure concentriquement la couronne intérieure (10) et comporte intérieurement une série de cavités (60, 62) pour recevoir les entraîneurs (14), un certain nombre d'amortisseurs (16) qui sont disposés entre les entraîneurs (14) et les parois des cavités (60, 62) et un certain nombre de dents (20) réparties sur le pourtour de la couronne extérieure (18), caractérisée en ce que les entraîneurs (14) de la couronne intérieure (10) sont agencés à la manière de tiges, en ce que les amortisseurs (16) ont une forme tubulaire et sont adaptés chacun concentriquement sur l'un des entraîneurs (14) en forme de tiges et en ce que les cavités (60, 62) forment chacune une ouverture cylindrique (64).

2. Roue dentée selon la revendication 1, caractérisée par
- une paire de capots d'extrémité (24), de forme annulaire, qui sont fixés sur des côtés opposés, en direction axiale, de la couronne intérieure (10) et qui sont disposés sur des côtés opposés de la couronne extérieure (18), à distance de celle-ci, et par
- une paire de joints d'étanchéité annulaires (26) en matière élastique pour rendre étanche l'interstice entre la couronne extérieure (18) et les capots d'extrémité (24) ainsi que pour absorber élastiquement des forces qui apparaissent entre la couronne extérieure (18) et les capots d'extrémité (24) et qui agissent dans les directions radiale, axiale et périphérique de la roue dentée.

3. Roue dentée selon la revendication 2, caractérisée en ce que les capots d'extrémité (24) sont fixés de telle façon à la couronne intérieure (10) qu'ils compriment les joints d'étanchéité annulaires (26).

4. Roue dentée selon l'une des revendications 1 à 3, caractérisée en ce que chaque amortisseur (16) comprend un manchon intérieur (46), en matière relativement non élastique, qui est adapté directement à un entraîneur (14) en forme de tige, un manchon extérieur (48), en matière relativement non élastique, qui entoure concentriquement le manchon intérieur (46), et un élément tubulaire (52), en matière élastique, qui est disposé entre les manchons intérieur et extérieur (46, 48).

5. Roue dentée selon la revendication 4, caractérisée en ce qu'un amortisseur (16) comprend en outre un autre manchon (50), en matière relativement non élastique, qui entoure concentriquement le manchon extérieur (48) ainsi qu'un autre élément tubulaire (54), en matière élastique, qui est disposé entre le manchon extérieur (48) et l'autre manchon (50).

6. Roue dentée selon l'une des revendications 1 à 5, caractérisée en ce que la couronne extérieure (18), en direction d'un plan perpendiculaire à l'axe de rotation de la roue dentée, est divisée en deux couronnes extérieures partielles (56, 58) qui sont agencées de façon à pouvoir être assemblées rigidement.

7. Roue dentée selon l'une ou plusieurs des revendications 1 à 6, caractérisée en ce que les entraîneurs (14) en forme de tiges, les manchons (46, 48, 50), les éléments tubulaires (52, 54) ainsi que les cavités (60, 62) ont une forme cylindrique.

# F I G. 1

# F I G. 2

F I G. 3

EP 0 172 922 B1

F I G. 4

F I G. 5

EP 0 172 922 B1